# FASCICULE DE BREVET EUROPEEN

(11) **EP 4 212 484 B1**
(45) Date de publication et mention de la délivrance du brevet: **19.06.2024**
(21) Numéro de dépôt: 23150858.1
(22) Date de dépôt: 10.01.2023
(51) Int. Cl.: C02F 1/48

(54) **CONTENANT DESTINÉ À RECEVOIR UN CONTENU À MAGNÉTISER**
BEHÄLTER ZUR AUFNAHME VON ZU MAGNETISIERENDEM INHALT
CONTAINER FOR RECEIVING CONTENT TO BE MAGNETIZED

(30) Priorité: 17.01.2022 FR 2200376
(43) Date de publication de la demande: 19.07.2023
(73) Titulaire: Inrimage, 38000 Grenoble (FR)
(72) Inventeur: YONNET, Jean-Paul, 38240 Meylan (FR); WOLOZAN, Stéphane, 38130 Echirolles (FR); PAIN, Xavier, 38000 Grenoble (FR)
(74) Mandataire: INNOV-GROUP

(56) Documents cités:
- KR-A- 20180 048 288
- US-A1- 2003 019 804
- US-A1- 2004 007 511

## Description

### Domaine technique de l'invention

La présente invention se rapporte à un contenant destiné à recevoir un contenu à magnétiser.

### Etat de la technique

Le principe de magnétisation des liquides est connu. Pour un liquide tel que l'eau, il est connu que cela permet de la purifier, notamment en lui rendant ses propriétés naturelles d'origine.

Il est connu dans l'état de la technique, par exemple dans le document US2004/007511, des contenants utilisés pour magnétiser les liquides tels que l'eau.

Cependant, les ondes électromagnétiques présentes dans l'environnement sont souvent sources de perturbations, que ce soit au niveau de la magnétisation ou du contenu à magnétiser.

Le but de l'invention est de proposer un contenant adapté pour magnétiser un contenu tout en le protégeant des effets d'ondes électromagnétiques externes, sans aucune perturbation de cette magnétisation.

### Exposé de l'invention

Ce but est atteint par un contenant présentant un corps réalisé autour d'un axe dit axe principal et formé d'un réceptacle et d'un couvercle venant s'apposer sur le réceptacle pour le fermer, et comprenant un volume interne destiné à recevoir un contenu à magnétiser, délimité par une paroi supérieure, une paroi latérale et une paroi inférieure dudit corps, caractérisé en ce que :
- Le réceptacle comporte au moins deux aimants permanents positionnés en vis-à-vis et intégrés à la paroi latérale,
- Le contenant comporte des moyens de blindage non magnétiques agencés sur et/ou dans la paroi inférieure, la paroi supérieure et la paroi latérale du corps du contenant pour protéger le volume interne des ondes électromagnétiques,
- Les moyens de blindage comportant des zones de contact électrique du réceptacle contre le couvercle.

Selon une particularité, le réceptacle comporte :
∘ Une armature réalisée dans un matériau amagnétique et comprenant un flanc latéral à travers lequel sont réalisés au moins deux ouvertures latérales en vis-à-vis,
∘ Un manchon d'habillage placé autour de ladite armature, ledit manchon formant une culasse magnétique,
∘ Lesdits au moins deux aimants permanents étant positionnés chacun dans une ouverture latérale de l'armature et polarisés suivant une direction perpendiculaire à l'axe principal.

Selon une autre particularité, l'armature et les aimants permanents portent des formes complémentaires coopérant entre elles pour assurer la fixation des aimants permanents sur l'armature.

Selon une autre particularité, le corps présente une forme cylindrique de révolution. Selon une autre particularité, les deux aimants permanents sont identiques et présentent chacun une forme de tuile.

Selon une réalisation particulière, les moyens de blindage comportent un film réalisé dans un matériau conducteur et non magnétique, déposé sur chaque paroi du corps du contenant.

Selon une autre réalisation particulière, les moyens de blindage comportent un dépôt d'une peinture, réalisé à base d'un matériau conducteur et non magnétique, réalisé sur chaque paroi du corps du contenant.

Selon une autre particularité, les deux aimants permanents sont polarisés en attraction magnétique ou en répulsion magnétique.

Selon une réalisation particulière, chaque aimant permanent est réalisé par mélange d'un liant thermodurcissable ou thermoplastique et d'une poudre magnétique.

### Brève description des figures

D'autres caractéristiques et avantages vont apparaître dans la description détaillée qui suit faite en regard des dessins annexés dans lesquels :
- La figure 1 montre, vu en perspective, le contenant conforme à l'invention ;
- La figure 2 montre le contenant de l'invention, coupé suivant un plan axial ;
- La figure 3 montre, vu en perspective, le réceptacle du contenant de l'invention ;
- La figure 4 montre le réceptacle de la figure 3, coupé suivant un plan axial ;
- La figure 5 montre le réceptacle de la figure 3, vu en éclaté ;

### Description détaillée d'au moins un mode de réalisation

Sur les dessins et pour la suite de la description, on définit un axe dit axe principal (A), tracé verticalement. Les termes "au-dessus", "au-dessous", "supérieur" et "inférieur" sont à comprendre en tenant compte de l'axe principal (A).

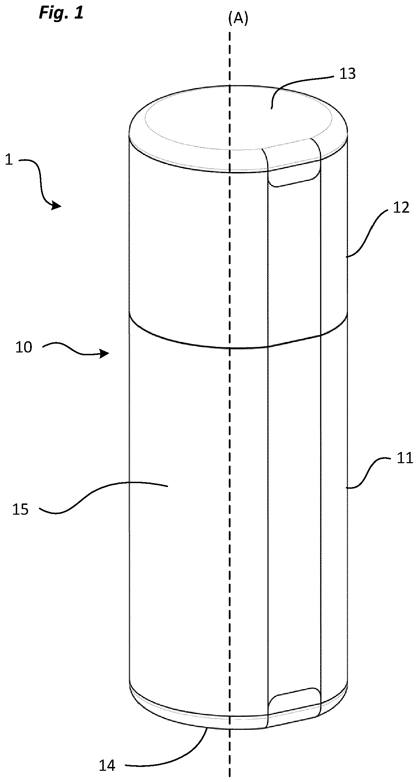

En référence à la figure 1, l'invention vise un contenant 1 comportant un corps 10 définissant un volume interne.

Le corps 10 comporte un réceptacle 11 et un couvercle 12, apposé sur le réceptacle 11 pour le fermer. La fermeture peut être réalisée de manière étanche en utilisant des moyens d'étanchéité, tels que par exemple un joint torique.

Le corps 10 comporte une paroi supérieure 13, une paroi inférieure 14 et une paroi latérale 15.

Le corps 10 peut présenter une forme de cylindre de révolution réalisée autour de l'axe principal (A).

Le volume interne doit être suffisant pour y loger, soit une bouteille, soit un flacon ou équivalent, rempli d'une substance à magnétiser. A titre d'exemple, les substances visées sont par exemple :
- L'eau, jus de fruit, soda, alcool type bière ou vin ou spiritueux ;
- Les essences diverses tels que huiles essentielles, élixirs floraux, élixirs minéraux, oligo-éléments ;
- Des compositions utilisées en cosmétique, en aromathérapie, en parfumerie ;

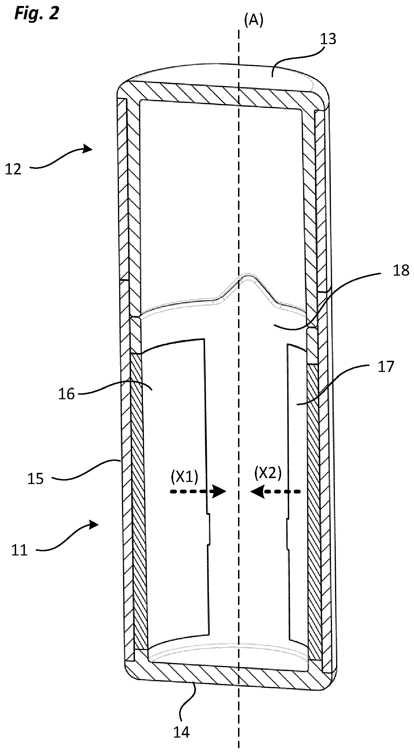

Selon l'invention, en référence à la figure 2, figure 4 et figure 5, le corps 10 du contenant 1 intègre au moins deux aimants 16, 17 permanents, agencés pour magnétiser le contenu placé dans le volume interne du contenant 1.

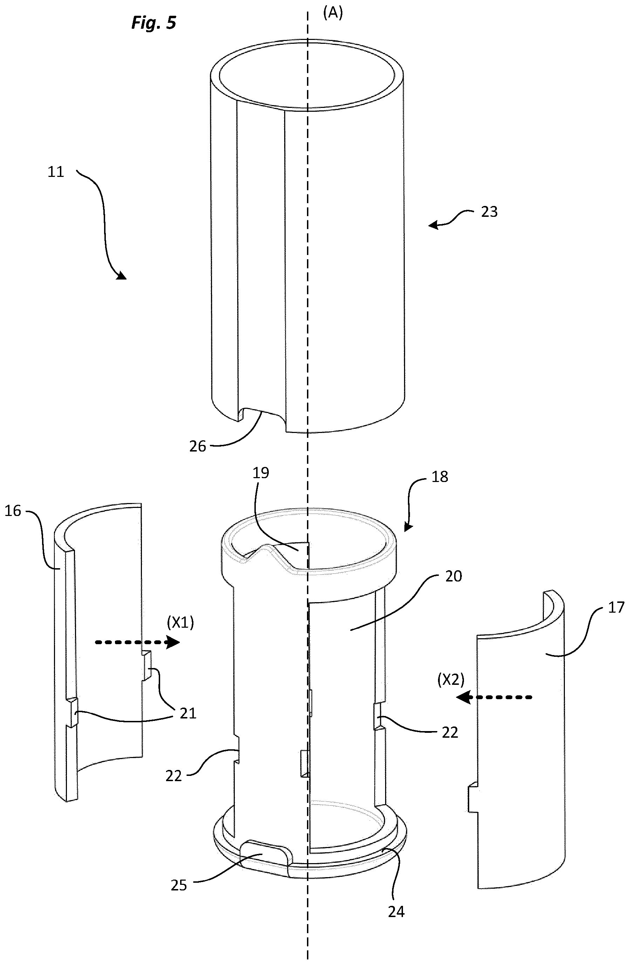

De manière avantageuse, les deux aimants permanents 16, 17 sont agencés de manière à avoir leur direction d'aimantation (X1, X2) suivant des directions perpendiculaires à l'axe principal (A) (figure 5).

Les deux aimants permanents 16, 17 sont situés en vis-à-vis et ne sont pas en contact direct l'un avec l'autre. Ils sont avantageusement placés symétriquement par rapport à un plan axial.

De manière avantageuse, les deux aimants permanents 16, 17 sont identiques. Ils sont par exemple réalisés chacun sous la forme d'une tuile. Ainsi leurs lignes de champ magnétique sont orientées suivant des directions radiales.

Les deux aimants permanents 16, 17 sont positionnés l'un par rapport à l'autre, suivant l'effet recherché, avantageusement en attraction. Ils peuvent être également mis en répulsion.

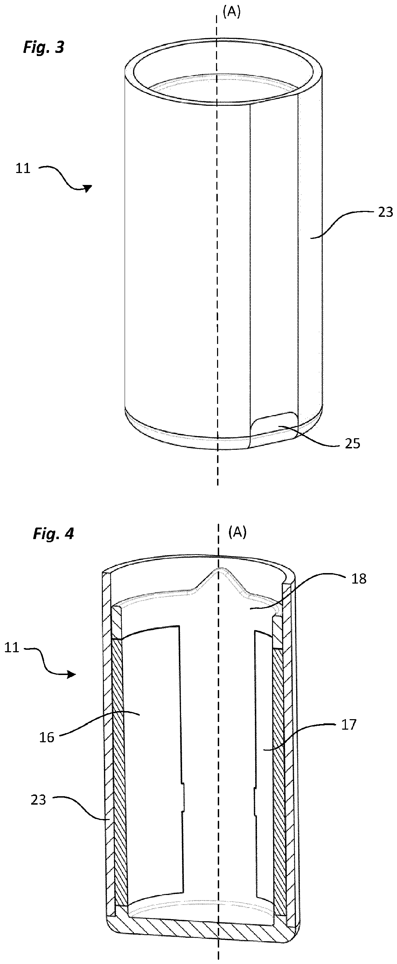

Selon une réalisation particulière, en référence à la figure 3, figure 4 et figure 5, le réceptacle 11 comporte une armature 18, réalisée dans un matériau amagnétique. L'armature 18 porte par exemple la paroi inférieure 14 du corps du contenant. Elle comporte également un flan latéral développé autour de l'axe principal (A) et qui comporte deux ouvertures 19, 20 en vis-à-vis. Chaque ouverture 19, 20 est destinée à accueillir l'un des deux aimants permanents 16, 17 de l'architecture magnétique. Des ergots et fentes 21, 22 peuvent être prévus sur les pourtours des ouvertures et des aimants permanents pour détromper et fixer chaque aimant permanent sur l'armature.

Sur son bord supérieur, l'armature 18 peut comporter un détrompeur mécanique, destiné à coopérer avec une forme correspondante réalisée sur le bord inférieur du couvercle, lorsque le couvercle est positionné sur le réceptacle.

Le réceptacle 11 comporte également un manchon d'habillage 23, dans lequel vient s'encastrer axialement l'armature 18. Ce manchon 23 forme une culasse magnétique, par exemple réalisée en fer doux ou matériau à fonction équivalente.

L'ensemble formé du manchon 23 et des aimants permanents 16, 17 permet de confiner le champ magnétique à l'intérieur du contenant, le manchon 23 assurant le rebouclage des lignes de champ magnétique.

La paroi inférieure 14 portée par l'armature 18 peut disposer d'une couronne 24 externe contre laquelle le manchon d'habillage 23 vient s'appuyer en butée après insertion. Un mécanisme 25, 26 de détrompage mécanique et de blocage peut également être prévu pour assurer le positionnement relatif de l'armature et du manchon.

De manière avantageuse, les aimants permanents 16, 17 sont par exemple réalisés chacun sous la forme d'un plasto-aimant. Un plasto-aimant est obtenu en mélangeant un liant thermoplastique ou thermodurcissable avec une poudre magnétique, éventuellement et avantageusement recyclée. Cette solution technique permet notamment de fabriquer des aimants de formes variées, à base de matériaux recyclés.

Selon un aspect particulier de l'invention, le contenant 1 comporte des moyens de blindage, agencés pour protéger le contenu placé dans son volume interne des perturbations électromagnétiques, sans perturber la magnétisation du contenu.

Ces moyens de blindage sont agencés de manière à recouvrir et/ou intégrer l'ensemble des parois du contenant 1 et sont situés de manière à englober les aimants permanents 17, 18 et le volume interne du contenant 1. Ils ne viennent pas en contact avec les aimants permanents.

Les moyens de blindage sont réalisés dans un matériau conducteur de l'électricité et non magnétique. Il peut ainsi s'agir d'un matériau métallique, comme par exemple le cuivre, à l'exclusion du fer qui est magnétique.

De manière non limitative, ils peuvent être réalisés sous la forme d'un ou plusieurs films déposés sur les parois du corps du contenant.

Il peut également s'agir d'une peinture présentant une composition adaptée pour réaliser la fonction de blindage de manière non magnétique.

Les moyens de blindage sont agencés de manière à présenter des zones de contact électrique entre le couvercle et le réceptacle, en vue de garantir une continuité électrique entre le réceptacle 11 et le couvercle 12. Cette continuité électrique peut être garantie par des organes de contacts électriques réalisés d'une part sur le réceptacle 11 et d'autre part sur le couvercle 12, ou par des dépôts de peinture conductrice à la jonction entre le réceptacle et le couvercle. Tout autre moyen peut bien entendu être envisagé.

La solution de l'invention permet ainsi de garantir la magnétisation de son contenu, tout en le protégeant des perturbations électromagnétiques. Elle est facile à fabriquer et assembler, et robuste mécaniquement, car réalisée à base de peu de pièces.

## Revendications

1. Contenant (1) présentant un corps (10) réalisé autour d'un axe dit axe principal (A) et formé d'un réceptacle (11) et d'un couvercle (12) venant s'apposer sur le réceptacle pour le fermer, et comprenant un volume interne destiné à recevoir un contenu à magnétiser, délimité par une paroi supérieure (13), une paroi latérale (15) et une paroi inférieure (14) dudit corps, **caractérisé en ce que** :
- Le réceptacle (11) comporte au moins deux aimants permanents (16, 17) positionnés en vis-à-vis et intégrés à la paroi latérale (15),
- Le contenant (1) comporte des moyens de blindage non magnétiques agencés sur et/ou dans la paroi inférieure (14), la paroi supérieure (13) et la paroi latérale (15) du corps du contenant pour protéger le volume interne des ondes électromagnétiques,
- Les moyens de blindage comportant des zones de contact électrique du réceptacle contre le couvercle.

2. Contenant selon la revendication 1, **caractérisé en ce que** :
- Le réceptacle (11) comporte :
∘ Une armature (18) réalisée dans un matériau amagnétique et comprenant un flanc latéral à travers lequel sont réalisés au moins deux ouvertures latérales en vis-à-vis,
∘ Un manchon d'habillage (23) placé autour de ladite armature (18), ledit manchon (23) formant une culasse magnétique,
et **en ce que**
∘ Lesdits au moins deux aimants permanents (16, 17) sont positionnés chacun dans une ouverture (19, 20) latérale de l'armature (18) et polarisés suivant une direction perpendiculaire à l'axe principal.

3. Contenant selon la revendication 2, **caractérisé en ce que** l'armature (18) et les aimants permanents (16, 17) portent des formes complémentaires coopérant entre elles pour assurer la fixation des aimants permanents sur l'armature.

4. Contenant selon l'une des revendications 1 à 3, **caractérisé en ce que** le corps (10) présente une forme cylindrique de révolution.

5. Contenant selon l'une des revendications 1 à 4, **caractérisé en ce que** les deux aimants permanents (16, 17) sont identiques et présentent chacun une forme de tuile.

6. Contenant selon l'une des revendications 1 à 5, **caractérisé en ce que** les moyens de blindage comportent un film réalisé dans un matériau conducteur et non magnétique, déposé sur chaque paroi du corps du contenant.

7. Contenant selon l'une des revendications 1 à 6, **caractérisé en ce que** les moyens de blindage comportent un dépôt d'une peinture, réalisé à base d'un matériau conducteur et non magnétique, réalisé sur chaque paroi du corps (10) du contenant (1).

8. Contenant selon l'une des revendications 1 à 7, **caractérisé en ce que** les deux aimants permanents (16, 17) sont polarisés en attraction magnétique.

9. Contenant selon l'une des revendications 1 à 7, **caractérisé en ce que** les deux aimants permanents (16, 17) sont polarisés en répulsion magnétique.

10. Contenant selon l'une des revendications 1 à 9, **caractérisé en ce que** chaque aimant permanent est réalisé par mélange d'un liant thermodurcissable ou thermoplastique et d'une poudre magnétique.

## Patentansprüche

1. Behälter (1), der einen Körper (10) aufweist, der um eine Achse, die Hauptachse (A) genannt wird, realisiert ist und aus einem Behälter (11) und einem Deckel (12) gebildet ist, der sich auf den Behälter legt, um ihn zu verschließen, und der ein Innenvolumen umfasst, das dazu bestimmt ist, einen zu magnetisierenden Inhalt aufzunehmen, und das durch eine obere Wand (13), eine Seitenwand (15) und eine untere Wand (14) des Körpers begrenzt ist, **dadurch gekennzeichnet, dass** :
- Der Behälter (11) hat mindestens zwei Permanentmagnete (16, 17), die gegenüberliegend positioniert und in die Seitenwand (15) integriert sind,
- Der Behälter (1) hat nichtmagnetische Abschirmmittel, die an und/oder in der Bodenwand (14), der oberen Wand (13) und der Seitenwand (15) des Behälterkörpers angeordnet sind, um das Innenvolumen vor elektromagnetischen Wellen abzuschirmen,
- Die Abschirmmittel umfassen Bereiche für den elektrischen Kontakt des Behälters mit dem Deckel.

2. Behälter nach Anspruch 1, **dadurch gekennzeichnet, dass** :
- Der Auffangbehälter (11) umfasst:
∘ Ein Anker (18), der aus einem nichtmagnetischen Material besteht und eine Seitenflanke aufweist, durch die mindestens zwei einander zugewandte Seitenöffnungen verlaufen,
o Eine Verkleidungshülse (23), die um den genannten Anker (18) herum angeordnet ist, wobei die Hülse (23) ein magnetisches Joch bildet, und dadurch, dass
∘ Die mindestens zwei Permanentmagnete (16, 17) sind jeweils in einer seitlichen Öffnung (19, 20) des Ankers (18) positioniert und in einer Richtung senkrecht zur Hauptachse polarisiert.

3. Behälter nach Anspruch 2, **dadurch gekennzeichnet, dass** der Anker (18) und die Permanentmagnete (16, 17) komplementäre Formen tragen, die miteinander zusammenwirken, um die Befestigung der Permanentmagnete am Anker zu gewährleisten.

4. Behälter nach einem der Ansprüche 1 bis 3, **dadurch gekennzeichnet, dass** der Körper (10) eine rotationszylindrische Form aufweist.

5. Behälter nach einem der Ansprüche 1 bis 4, **dadurch gekennzeichnet, dass** die beiden Permanentmagnete (16, 17) identisch sind und jeweils eine Dachziegelform aufweisen.

6. Behälter nach einem der Ansprüche 1 bis 5, **dadurch gekennzeichnet, dass** die Abschirmmittel einen Film aus einem leitfähigen, nichtmagnetischen Material umfassen, der auf jede Wand des Körpers des Behälters aufgebracht ist.

7. Behälter nach einem der Ansprüche 1 bis 6, **dadurch gekennzeichnet, dass** die Abschirmungsmittel eine Abscheidung einer Farbe umfassen, die aus einem leitenden und nichtmagnetischen Material hergestellt ist und auf jeder Wand des Körpers (10) des Behälters (1) ausgeführt wird.

8. Behälter nach einem der Ansprüche 1 bis 7, **dadurch gekennzeichnet, dass** die beiden Permanentmagnete (16, 17) auf magnetische Anziehung polarisiert sind.

9. Behälter nach einem der Ansprüche 1 bis 7, **dadurch gekennzeichnet, dass** die beiden Permanentmagnete (16, 17) magnetisch abstoßend polarisiert sind.

10. Behälter nach einem der Ansprüche 1 bis 9, **dadurch gekennzeichnet, dass** jeder Permanentmagnet durch Mischen eines wärmehärtenden oder thermoplastischen Bindemittels und eines magnetischen Pulvers hergestellt wird.

## Claims

1. Container (1) having a body (10) produced about an axis called the main axis (A) and formed by a receptacle (11) and a lid (12) which is placed on the receptacle in order to close it, and comprising an internal volume intended to receive contents to be magnetised, delimited by a top wall (13), a side wall (15) and a bottom wall (14) of the said body, **characterised in that** :
- The receptacle (11) has at least two permanent magnets (16, 17) positioned opposite each other and integrated into the side wall (15),
- The container (1) comprises non-magnetic shielding means arranged on and/or in the bottom wall (14), top wall (13) and side wall (15) of the container body to protect the internal volume from electromagnetic waves,
- The shielding means comprise areas of electrical contact between the receptacle and the cover.

2. Container according to claim 1, **characterized in that**:
- The receptacle (11) comprises :
∘ An armature (18) made of a non-magnetic material and comprising a sidewall through which at least two opposing side apertures are formed,
∘ A covering sleeve (23) placed around said armature (18), said sleeve (23) forming a magnetic yoke,
and **in that**
∘ These at least two permanent magnets (16, 17) are each positioned in a lateral opening (19, 20) in the armature (18) and polarised in a direction perpendicular to the main axis.

3. A container as claimed in claim 2, **characterised in that** the armature (18) and the permanent magnets (16, 17) have complementary shapes which cooperate with each other to ensure that the permanent magnets are fixed to the armature.

4. Container according to one of claims 1 to 3, **characterised in that** the body (10) has a cylindrical shape of revolution.

5. Container according to one of claims 1 to 4, **characterised in that** the two permanent magnets (16, 17) are identical and each has a tile shape.

6. Container according to one of claims 1 to 5, **characterised in that** the shielding means comprise a film made of a conductive and non-magnetic material deposited on each wall of the body of the container.

7. Container according to one of claims 1 to 6, **characterised in that** the shielding means comprise a deposit of paint, based on a conductive and non-magnetic material, applied to each wall of the body (10) of the container (1).

8. Container according to one of claims 1 to 7, **characterised in that** the two permanent magnets (16, 17) are polarised in magnetic attraction.

9. Container according to one of claims 1 to 7, **characterised in that** the two permanent magnets (16, 17) are polarised in magnetic repulsion.

10. Container according to one of claims 1 to 9, **characterised in that** each permanent magnet is produced by mixing a thermosetting or thermoplastic binder and a magnetic powder.
